# EUROPÄISCHE PATENTSCHRIFT

(11) **EP 3 645 343 B1**
(45) Veröffentlichungstag und Bekanntmachung des Hinweises auf die Patenterteilung: **09.03.2022**
(21) Anmeldenummer: 18738188.4
(22) Anmeldetag: 12.06.2018
(51) Int. Cl.: B60R 1/00, H04N 5/235, H04N 7/18

(54) **KAMERAVORRICHTUNG SOWIE VERFAHREN ZUR UMGEBUNGSANGEPASSTEN ERFASSUNG EINES UMGEBUNGSBEREICHS EINES FAHRZEUGS**
CAMERA DEVICE AND METHOD FOR THE ENVIRONMENT-BASED ADAPTIVE DETECTION OF THE SURROUNDINGS OF A VEHICLE
DISPOSITIF D'APPAREIL PHOTO ET PROCÉDÉ DE DÉTECTION ADAPTATIVE DES ENVIRONS D'UN VÉHICULE SUR LA BASE DE SON ENVIRONNEMENT

(30) Priorität: 27.06.2017 DE 102017210845
(43) Veröffentlichungstag der Anmeldung: 06.05.2020
(73) Patentinhaber: Conti Temic microelectronic GmbH, 90411 Nürnberg (DE)
(72) Erfinder: BREUER, Karsten, 88179 Oberreute (DE); KRÖKEL, Dieter, 88097 Eriskirch (DE)
(74) Vertreter: Continental Corporation
(86) Internationale Anmeldenummer: PCT/DE2018/200060
(87) Internationale Veröffentlichungsnummer: WO 2019/001648

(56) Entgegenhaltungen:
- EP-A1- 2 455 891
- DE-A1-102012 024 650
- DE-A1-102014 213 801
- US-A1- 2011 052 095
- US-A1- 2015 363 914

## Beschreibung

Die Erfindung betrifft eine Kameravorrichtung sowie ein Verfahren zur optimierten Erfassung eines Umgebungsbereichs eines Fahrzeugs. Ferner betrifft die Erfindung das Fahrzeug mit einer solchen Kameravorrichtung.

Zur Realisierung von Fahrerassistenzvorrichtungen, wie z. B. einer Verkehrszeichenerkennung oder eines Spurhalteassistenten benötigen Kamerasysteme einen horizontalen Bildwinkel von ca. 50 Grad und einen vertikalen Bildwinkel von ca. 30 Grad. Neue Funktionen wie die Querverkehrs- oder die Ampelerkennung beim Halten in vorderster Reihe benötigen jedoch einen deutlich größeren Sichtwinkel, um die sich beim nahen Auffahren im Peripheriebereich des Bildes befindlichen Objekte erfassen zu können. Demgegenüber erfordert beispielsweise hochautomatisiertes Fahren oder ein Spurhalteassistent das Erkennen von Objekten und Fahrbahnstrukturen auch in großer Entfernung, wofür eine entsprechende Auflösung erforderlich ist.

DE 102015208889 A1 zeigt eine Kameravorrichtung zum Abbilden eines Umfeldes für ein Kraftfahrzeug mit einer Bildsensoreinrichtung zur Aufnahme eines Pixelbildes und einer Prozessoreinrichtung, die dazu ausgelegt ist, benachbarte Pixel des Pixelbildes in einem angepassten Pixelbild zusammenzufassen. Unterschiedliche angepasste Pixelbilder können in unterschiedlichen Auflösungen generiert werden durch ein Zusammenfassen der Pixelwerte der benachbarten Pixel in Form einer 2-x-2 Bild-Pyramide, in Form einer n-x-n Bild-Pyramide, oder in Form einer m-x-n Bild-Pyramide. Das Zusammenfassen der Pixelwerte der benachbarten Pixel kann auch nur in einem vorbestimmten Teilbereich des Pixelbildes vorgenommen werden, wobei Lage und Größe des Teilbereichs verändert werden können.

US 2011/052095 A1 zeigt ein Verfahren zur Erzeugung eines optimierten hochaufgelösten Bildes, wobei ein hochaufgelöstes und mehrere niedriger aufgelöste Bilder erfasst und kombiniert werden.

DE 102014213801 A1 zeigt ein Verfahren zum Generieren einer Bildfolge zur Wiedergabe auf einem Anzeigegerät eines Fahrzeugs. Dazu werden drei Bildsignale von einer Kamera eingelesen: als erstes Bildsignal ein zu einem ersten Zeitpunkt mit einer ersten Belichtungseinstellung erfasstes erstes Bild der Fahrzeugumgebung, ein zweites Bildsignal zu einem nachfolgenden zweiten Zeitpunkt mit einer zweiten Belichtungseinstellung erfasstes zweites Bild der Fahrzeugumgebung und ein drittes Bildsignal zu einem nachfolgenden dritten Zeitpunkt mit der ersten Belichtungseinstellung erfasstes drittes Bild der Fahrzeugumgebung. Unter Verwendung zumindest des ersten Bildsignals und des dritten Bildsignals wird ein Zwischenbildsignal bereitgestellt. Schließlich wird unter Verwendung des ersten Bildsignals, des Zwischenbildsignals und des dritten Bildsignals ein Anzeigesignal erzeugt, das eine Bildfolge aus dem ersten Bild, dem Zwischenbild und dem dritten Bild mit einer für das menschliche Auge geeigneten Bildwiederholfrequenz repräsentiert.

DE 102012024650 A1 zeigt ein Verfahren zum Betreiben einer HDR-Kameraeinrichtung eines Kraftfahrzeugs, wobei mittels der Kameraeinrichtung ein HDR-Bild eines Umgebungsbereiches des Kraftfahrzeugs bereitgestellt wird und zum Bereitstellen des HDR-Bilds zumindest zwei Belichtungswerte eines Bildsensors eingestellt werden.

US 2015363914 A1 zeigt ein Verfahren zum Bilden eines zusammengesetzten Ausgabebilds eines Gebiets zur Verwendung bei einer Unterwasservermessung in einem sich bewegenden Unterwasserabbildungssystem.

EP 2455891 A1 zeigt ein elektronisches Bildaufnahmesystem zum automatischen Aufnehmen eines Bildes eines schwachen Lichtmusters, das von einer Probe emittiert wird.

Als Ausgangspunkt der Lösung dient eine Kameravorrichtung zur Erfassung eines Umgebungsbereichs eines eigenen Fahrzeugs wie sie im Folgenden beschrieben ist.

Bei dem Umgebungsbereich handelt es sich beispielsweise um einen in Fahrtrichtung des eigenen Fahrzeugs vorausliegenden, seitlichen und/oder rückwärtigen Umgebungsbereich.

Die Kameravorrichtung weist eine Optronik auf, welche ausgebildet ist, eine Bildfolge des Umgebungsbereichs aufzunehmen.

Die Optronik umfasst eine Weitwinkeloptik. Vorzugsweise ist die Weitwinkeloptik mit einem horizontalen und/oder vertikalen Bildwinkel von z. B. mindestens + / - 50 Grad, insbesondere von mindestens + / - 70 Grad und/oder von höchstens von + / - 100 Grad zur optischen Achse ausgebildet. Mittels der Weitwinkeloptik ist beispielsweise ein Peripherieumfeld wie z. B. ein Kreuzungsbereich zur frühzeitigen Objektauswertung von kreuzenden Verkehrsteilnehmern erfassbar. Die Bildwinkel bestimmen das Sichtfeld (Field of view, FOV) der Kameravorrichtung.

Weiterhin umfasst die Optronik einen hochauflösenden Bildaufnahmesensor. Mittels des hochauflösenden Bildaufnahmesensors ist insbesondere eine Objektauswertung wie z. B. die Auswertung von Verkehrszeichen oder Fahrspuren im Fernbereich, somit insbesondere in einem Entfernungsbereich zum eigenen Fahrzeug von mindestens 50 Metern ermöglicht. Unter dem hochauflösenden Bildaufnahmesensor ist insbesondere ein Bildaufnahmesensor mit einer Pixelanzahl von mehreren Megapixeln, beispielsweise von mindestens fünf Megapixeln, vorzugsweise von mindestens sieben Megapixeln, im Speziellen von mindestens zehn Megapixeln zu verstehen. Vorzugsweise weist der Bildaufnahmesensor eine homogene Pixel/cm-Auflösung auf.

Hochauflösende Bildaufnahmesensoren sind bislang für den automobiltechnischen Einsatz insbesondere in Verbindung mit einer Weitwinkeloptik als ungeeignet eingestuft, da sie eine effiziente Verarbeitung der großen Pixelanzahl für die aufwendigen Bildverarbeitungsalgorithmen nicht zulassen.

Eine erfindungsgemäße Kameravorrichtung zur Erfassung eines Umgebungsbereichs eines eigenen Fahrzeugs umfasst eine Optronik und eine Bilderfassungssteuerungseinheit, die dazu ausgebildet sind, eine Bildfolge des Umgebungsbereichs aufzunehmen.

Die Optronik umfasst eine Weitwinkeloptik und einen hochauflösenden Bildaufnahmesensor. Die Optronik und die Bilderfassungssteuerungseinheit sind dazu ausgebildet bzw. konfiguriert, dass während der Aufnahme der Bildfolge eine Nutzung von mindestens drei unterschiedlichen Belichtungsmodi des Bildaufnahmesensors in Kombination mit mindestens zwei unterschiedlichen "Binningmodi" erfolgt.

Unterschiedliche Belichtungsmodi können z.B. durch unterschiedliche Belichtungszeiten bei einer gegebenen Umgebungshelligkeit eingestellt werden. Für eine gegebene Umgebungshelligkeit wird häufig die optimale Belichtungszeit verwendet, welche zur Aufnahme von normal belichteten Bildern führt. Eine Belichtungszeit, die kürzer als die optimale Belichtungszeit ist, führt zu unterbelichteten Bildern. Diese können aber für die Detektion von lichtstarken Umgebungsbereiche, in denen sich z.B. aktive Lichtquellen oder angestrahlte Retroreflektoren befinden, ausreichend bzw. besser sein, da diese Bildbereiche bei normaler Belichtungszeit überbelichtet sind. Durch kürzere Belichtungszeiten kann zudem Bewegungsunschärfe (englisch: motion blur) minimiert werden, welche durch eine Eigenbewegung des eigenen Fahrzeugs und der darin befestigten Kameravorrichtung mit höherer Geschwindigkeit verursacht wird. Dagegen führt eine Belichtungszeit, die länger als die optimale Belichtungszeit ist, zu überbelichteten Bildern. Dies ist dennoch hilfreich, um in dunklen Umgebungsbereichen Objekte detektieren zu können, z.B. Fußgänger oder Tiere neben der Fahrbahn.

WO 2009/135460 A1 zeigt ein Verfahren zur Belichtungssteuerung für ein Kamerasystem in einem Kraftfahrzeug, bei dem für unterschiedliche Fahrassistenzfunktionen abwechselnd Bilder mit einer längeren und Bilder mit einer kürzeren Belichtungszeit aufgenommen werden können.

Als Binning wird das Zusammenfassen von benachbarten Pixeln zu größeren Einheiten bezeichnet, z.B. können jeweils zwei horizontal benachbarte Pixel zu einem breiten Pixel oder jeweils zwei vertikal benachbarte Pixel zu einem hohen Pixel zusammengefasst werden, das reduziert die Auflösung gegenüber dem maximal aufgelösten Bild (ungebinntes Bild), wodurch es aber schneller weiterverarbeitet werden kann. Außerdem erhöht sich die Intensität des kombinierten Pixels gegenüber einem einzelnen Pixel. Daher kann unter Umständen die Belichtungszeit zur Aufnahme eines Bildes verkürzt werden.

Bei 2x2 Binning werden vier ein Pixelquadrat bildende benachbarte Pixel zusammengefasst, bei 3x3 Binning neun Pixel u.s.w.. Zwei unterschiedliche Binningmodi sind also z.B. durch die Aufnahme bzw. Erzeugung von ungebinnten vs. 2x2 gebinnten Bildern gegeben. Da ungebinnte Bilder eine sehr hohe Datenmenge aufweisen, kann ein Teilbereich selektiert werden (Region of Interest, ROI), der einer Weiterverarbeitung zugeführt wird.

Das Pixelbinning kann bereits analog oder digital auf dem Bildsensor (Imager) erfolgen. Alternativ kann das Pixelbinning aber auch in einer mit dem Bildsensor verbundenen Prozessoreinheit durchgeführt werden. Dies kann dort entweder in hartverdrahteter Logik oder mittels eines Programms/Software erfolgen. In allen Fällen wird aus dem ursprünglichen Rohbild ein angepasstes Bild mit reduzierter Auflösung erzeugt.

Ein einfacher Fall einer Nutzung von zwei unterschiedlichen Belichtungsmodi des Bildaufnahmesensors in Kombination mit zwei unterschiedlichen Binningmodi ist durch einen Wechsel der Aufnahme bzw. Erzeugung von gebinnten kurz belichteten und der Aufnahme von ungebinnten lang belichteten Bilder.

Insgesamt könnten mit den zwei unterschiedlichen Belichtungsmodi des Bildaufnahmesensors und den zwei unterschiedlichen Binningmodi vier unterschiedliche kombinierte Modi realisiert werden: gebinnt kurz belichtet; ungebinnt kurz belichtet; gebinnt lang belichtet und ungebinnt lang belichtet.

Die Bilderfassungssteuerungseinrichtung entspricht oder ist zumindest ein Bestandteil der prozessierenden Einheit (z.B. System-on-chip, SoC), in der das "Steuerprogramm" der Image Control (Bilderfassungssteuerung) ausgeführt wird. Eine Aufgabe der Bilderfassungssteuerungseinrichtung ist es insbesondere, die Erzeugung von auflösungsreduzierten Bildern bzw. das Erfassen eines Bilds eines Teilbereichs mit maximaler Auflösung durch die Optronik zu steuern.

Gemäß einer vorteilhaften Ausführungsform sind die Optronik und die Bilderfassungssteuerungseinheit dazu ausgebildet,
dass die Aufnahme der Bildfolge gemäß einer fest vorgegebenen Reihenfolge der Kombinationen von Belichtungs- und Binningmodi erfolgt.

Erfindungsgemäß sind die Optronik und die Bilderfassungssteuerungseinheit dazu ausgebildet, dass drei unterschiedliche Belichtungsmodi zur Aufnahme der Bildfolge verwendet werden: ein erster Belichtungsmodus mit einer optimalen Belichtungszeit (Normalbelichtung), ein zweiter Belichtungsmodus mit einer Belichtungszeit, die kürzer ist als die optimale Belichtungszeit, (Unterbelichtung) und ein dritter Belichtungsmodus mit einer Belichtungszeit, die länger ist als die optimale Belichtungszeit (Überbelichtung).

Bevorzugt sind die Optronik und die Bilderfassungssteuerungseinheit dazu ausgebildet sind, dass ein erster Binningmodus zur Aufnahme bzw. Erzeugung eines gebinnten "Übersichtsbildes", also eines Bildes des gesamten Erfassungsbereichs der Kameravorrichtung mit reduzierter Auflösung, und ein zweiter Binningmodus zur Aufnahme eine ungebinnten Teilbereichs, also eines Bildausschnitts (ROI) mit maximaler Auflösung der Kameravorrichtung, vorgegeben werden.

Gemäß einer vorteilhaften Weiterbildung sind die Optronik und die Bilderfassungssteuerungseinheit dazu ausgebildet, dass
der Belichtungsmodus für die Aufnahme des ungebinnten Teilbereichs aus mindestens einer vorangegangenen gebinnten Aufnahme bestimmt wird. Sofern gebinnte Übersichtsbilder in mehreren unterschiedlichen Belichtungsmodi aufgenommen bzw. erzeugt worden sind, kann für die Aufnahme des ungebinnten Teilbereichs der Belichtungsmodus gewählt werden, der für den interessierenden Bildbereich das beste Ergebnis (insbesondere hinsichtlich Kontrast) gezeigt hat.

In einer weiteren vorteilhaften Ausführungsform sind die Optronik und die Bilderfassungssteuerungseinheit dazu ausgebildet, dass die "Umschaltung" (d.h. die Vorgabe eines geänderten Belichtungs- und/oder Binningmodus für ein aufzunehmendes Bild) adaptiv vorgenommen wird, indem eine bestimmte Kombination von Binning- und Belichtungsmodus für die Aufnahme oder Erzeugung eines Bildes der Bildfolge vorgegeben wird, in Abhängigkeit von
- dem Ergebnis der Bildauswertung mindestens eines vorherigen Bildes der Bildfolge;
- Fahrzeugdaten (Fahrzeugbewegungsdaten, Fahrzeuggeschwindigkeit, ...) und/oder
- dem Systemzustand der Kameravorrichtung (Temperatur, Prozessorressourcen, ...). In dieser Ausführungsform gibt es keinen strikten periodischen Wechsel definierter kombinierter Belichtungs- und Betriebsmodi.

Abhängig von einer aktuellen Verkehrs- bzw. Umgebungssituation kann einerseits vorgegeben werden, ob z.B. aktuell ein gebinntes "Übersichtsbild" des vollständigen Erfassungsbereichs der Optronik aufgenommen bzw. erzeugt werden soll oder ein ungebinntes Bild eines vorgegebenen Teilbereichs oder des gesamten Erfassungsbereichs. Der Teilbereich kann hinsichtlich Lage, Höhe und Breite an die aktuelle Situation angepasst werden. Zudem kann ein situationsangepasster Belichtungsmodus vorgegeben werden, sofern dies erforderlich ist.

Aktuelle Verkehrs- bzw. Umgebungssituationen können z.B. sein:
- Autobahnfahrt
- Überlandfahrt
- Geradeausfahrt
- kurvenreiche Fahrt
- Stadtverkehr
- Kreuzungssituation
- Ampelregelung
- Zebrastreifen
- Überholmanöver und/oder
- Kollisionsgefahr (stationäres Hindernis, bewegtes Hindernis, Fußgänger, Radfahrer, Tier etc.).

Gemäß einer bevorzugten Ausführungsform sind die Optronik und die Bilderfassungssteuerungseinheit dazu ausgebildet, dass eine Auswahl getroffen wird, welches Bild der Bildfolge, das mit einem ausgewählten Belichtungs- und Binningmodus aufgenommen/erzeugt wurde, einer Bildauswertung zugeführt wird, abhängt
- vom Ergebnis der Bildauswertung mindestens eines vorherigen Bildes der Bildfolge,
- von Fahrzeugdaten und/oder
- vom Systemzustand der Kameravorrichtung.

Dies ist insbesondere dann vorteilhaft, wenn zyklisch stets drei Bilder in vorgegebenen kombinierten Modi erzeugt bzw. aufgenommen werden, jedoch nur eines dieser drei Bilder im Rahmen einer Bildverarbeitung z.B. zur Objekterkennung ausgewertet werden soll.

Vorzugsweise sind die Optronik und die Bilderfassungssteuerungseinheit dazu ausgebildet, dass eine Anpassung der Belichtungszeit oder weiterer Parameter des Bildaufnahmesensors individuell in den verschiedenen Belichtungsmodi vorgenommen wird in Abhängigkeit
- vom Ergebnis der Bildauswertung mindestens eines vorherigen Bildes der Bildfolge,
- von Fahrzeugdaten und/oder
- vom Systemzustand der Kameravorrichtung.

Bevorzugt sind die Optronik und die Bilderfassungssteuerungseinheit dazu ausgebildet, dass als Ergebnis der Bildauswertung die Umgebung des Fahrzeugs, Verkehrsteilnehmer und/oder Lichtbedingungen der Umgebung bestimmt werden.

Die Erfindung betrifft ferner ein Verfahren zur Erfassung eines Umgebungsbereichs eines eigenen Fahrzeugs mittels einer Kameravorrichtung umfassend
- Aufnehmen einer Bildfolge des Umgebungsbereichs des Fahrzeugs mittels einer Optronik, wobei die Optronik eine Weitwinkeloptik und einen hochauflösenden Bildaufnahmesensor umfasst,
- wobei während des Aufnehmens der Bildfolge mindestens drei unterschiedliche Belichtungsmodi des Bildaufnahmesensors in Kombination mit mindestens zwei unterschiedlichen Binningmodi genutzt werden und
- drei unterschiedliche Belichtungsmodi zur Aufnahme der Bildfolge verwendet werden: ein erster Belichtungsmodus mit einer optimalen Belichtungszeit, ein zweiter Belichtungsmodus mit einer Belichtungszeit, die kürzer ist als die optimale Belichtungszeit und ein dritter Belichtungsmodus mit einer Belichtungszeit, die länger ist als die optimale Belichtungszeit.

Im Folgenden werden bevorzugte Ausführungsbeispiele der Erfindung anhand von schematischen Zeichnungen näher erläutert. Dabei zeigen
Fig. 1 schematisch eine Kameravorrichtung 1 zur Erfassung eines Umgebungsbereichs eines eigenen Fahrzeugs mit einer Bilderfassungssteuerungseinheit;
Fig. 2 eine Folge von drei Bildern, die mit unterschiedlichen Belichtungs- und Binningmodi aufgenommen bzw. erzeugt wurden und Fig. 3 eine Folge von drei Bildern: einem Übersichtsbild und zwei Detailbildern.

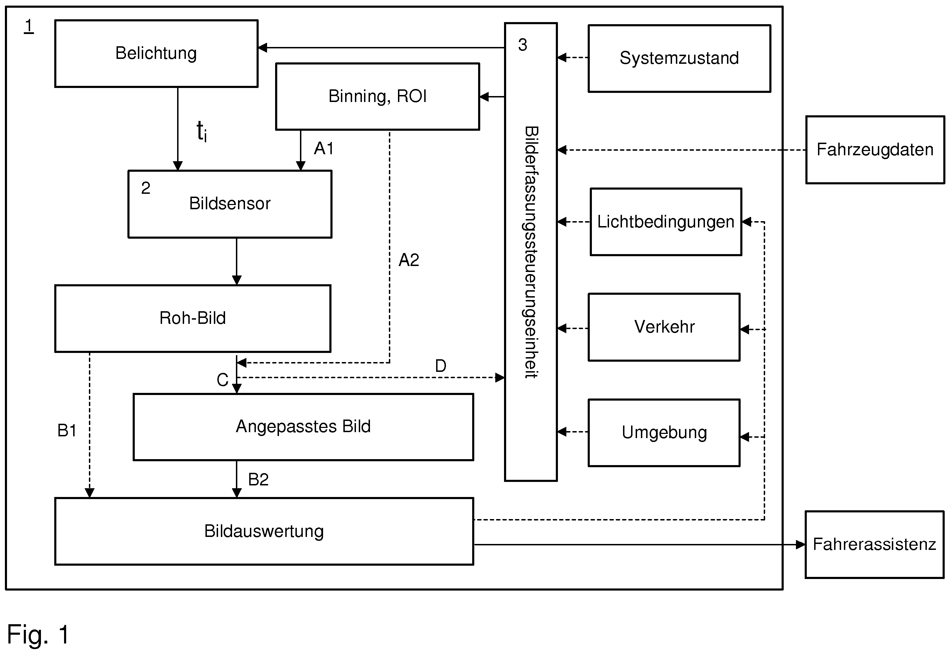

Fig. 1 zeigt schematisch ein Diagramm einer Kameravorrichtung 1 zur Erfassung eines Umgebungsbereichs eines eigenen Fahrzeugs mit einer Optronik mit einer Weitwinkeloptik (nicht dargestellt) und einem hochauflösenden Bildsensor 2 und einer Bilderfassungssteuerungseinheit 3.

Die Bilderfassungssteuerungseinheit 3 gibt für ein aufzunehmendes Bild einen Modus der Belichtung, z.B. durch einen Belichtungsparameter - insbesondere die Belichtungszeit tᵢ - und einen Modus des Binnings vor, ggfs. mit einer definierten Region-of-Interest (ROI, Bildausschnitt).

Als Pixelbinning wird ein Zusammenfassen von mehreren benachbarten Pixeln zur Erzeugung eines auflösungsreduzierten Bilds bezeichnet. Das Pixelbinning kann bereits *analog oder digital* auf dem Bildsensor 2 erfolgen (Pfeil A1) . Alternativ kann das Pixelbinning aber auch in einer mit dem Bildsensor 2 verbundenen Prozessoreinheit durchgeführt werden (gestrichelter Pfeil A2) . Dies kann dort entweder in hartverdrahteter Logik oder mittels eines Programms/Software erfolgen. Aus dem ursprünglichen Rohbild wird ein angepasstes Bild mit reduzierter Auflösung erzeugt (Pfeil C).

Der Bildauswertung kann das Roh-Bild, also das Bild mit maximaler Auflösung (Pfeil B1) oder das angepasste Bild (Pfeil B2) zugeführt werden.

Bei einer fest vorgegebenen Reihenfolge der unterschiedlichen Modenkombinationen kann die Bilderfassungssteuerungseinheit 3 die Information vom Bildsensor 2, dass und wie das Roh-Bild erfasst wurde (Pfeil D), empfangen. Der Bildsensor gibt insbesondere auch Histogramm-Daten des aufgenommenen Bildes an die Bilderfassungssteuerungseinheit 3. Die Bilderfassungssteuerungseinheit 3 kann dann den Belichtungs- und Binningmodus für das nachfolgend aufzunehmende Bild festlegen.

Die Vorgabe des kombinierten Belichtungs- und Binningmodus für das nächste aufzunehmende Bild hängt hierbei nur von der Zeit ab, nicht vom Ergebnis der Bildauswertung oder externen Daten wie z.B. Fahrzeugdaten oder dem Systemzustand der Kameravorrichtung 1. Die Bilderfassungssteuereinheit 3 wechselt eine vorgegebene Reihenfolge von kombinierten Belichtungs- und Binningmodi periodisch durch.

Eine der beiden einfachsten periodisch wechselnden Betriebsarten der Kameravorrichtung 1, die nicht Gegenstand der Erfindung ist, besteht darin, dass die Aufnahme bzw. Erzeugung eines gebinnten, kurz belichteten Bildes wechselt mit der Aufnahme eines ungebinnten, lang belichteten Bildes.

Die zweite Betriebsart besteht dann in einem Wechsel zwischen der Aufnahme von ungebinnten, kurz belichteten Bildern und der Aufnahme bzw. Erzeugung von gebinnten, lang belichteten Bildern. Insgesamt sind demzufolge mit je zwei Modi für Belichtung und Binning vier unterschiedliche Kombinationen darstellbar.

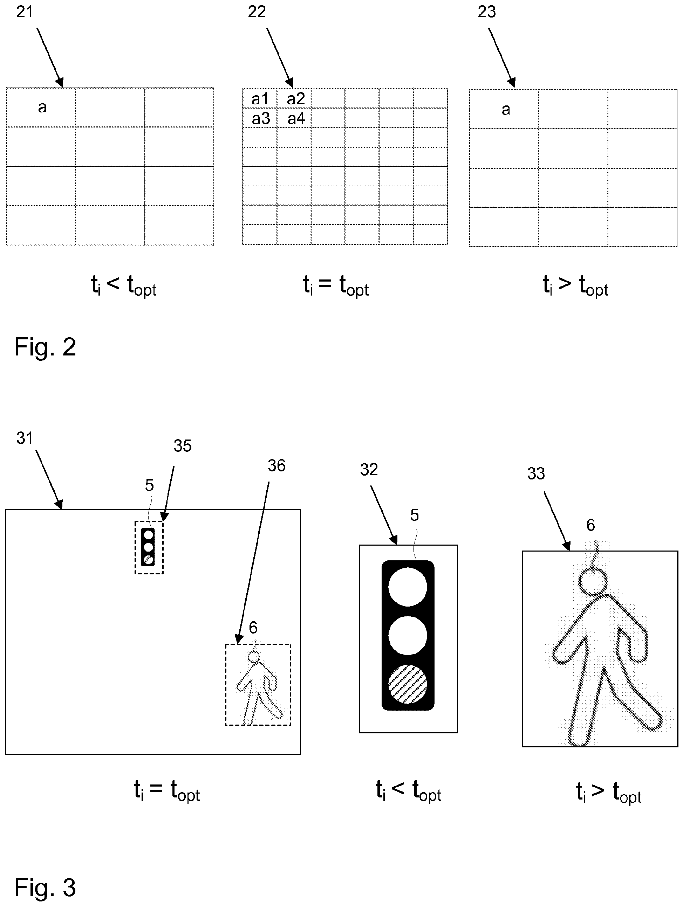

Fig. 2 zeigt exemplarisch ein Ausführungsbeispiel, bei dem eine Folge von drei Bildern aufgenommen wird. Das erste Bild 21 wird mit einer kürzeren Belichtungszeit als der optimalen Belichtungszeit und mit einem 2x2 Binning (die Zelle a entspricht 4 Einzelpixeln) aufgenommen bzw. aus einer ungebinnten Aufnahme erzeugt. Das zweite Bild 22 wird mit optimaler Belichtungszeit und ungebinnt aufgenommen (symbolisiert durch vier Pixeln a1 bis a4) . Das dritte Bild 23 wird mit einer Belichtungszeit aufgenommen, die länger als die optimale Belichtungszeit ist und mit 2x2 Pixelbinning (Zelle a).

Diese Reihenfolge kann während der Erfassung der gesamten Bildfolge unverändert beibehalten werden.

Eine alternative Ausführungsvariante einer fest vorgegebenen Reihenfolge besteht darin, nach der Erfassung der drei Bilder wie in Fig. 2, die Belichtungszeiten jeweils fortzuführen (4. Bild kürzer, 5. Bild optimal, 6. Bild länger), jedoch durchzuwechseln, welches Bild ungebinnt aufgenommen wird, also z.B. das 6. Bild ungebinnt anstelle des 5. Bildes und anschließend das 7. (wiederum kürzer belichtete) Bild anstelle des 8. oder 9. Bildes.

Fig. 3 soll ein alternatives bevorzugtes Ausführungsbeispiel veranschaulichen:
Als erstes Bild 31 wird ein gebinntes Bild mit optimaler Belichtungszeit aufgenommen (bzw. aus der Aufnahme erzeugt). Das Bild könnte bei Dämmerung aufgenommen worden sein. Schematisch zu erkennen sind eine Ampel 5 und ein Fußgänger 6, die im ersten Bild erfasst wurden. Das erste Bild 31 kann einer Bildverarbeitung zugeführt werden, die in diesem Bild 31 Bildbereiche 35, 36 (ROIs) mit potentiell relevanten Objekten 5, 6 in der Umgebung des Fahrzeugs bzw. das Fahrzeug umgebende Verkehrsteilnehmer erkennt. Bei der Bildauswertung wird ermittelt, dass der Bereich 35 mit der Ampel 5 mit überhöhter Lichtintensität erfasst wurde. Dies liegt daran, dass die Ampel 5 eine aktive Lichtquelle ist. Die Bildauswertung ergibt weiterhin, dass der Bereich 36 mit dem Fußgänger 36 mit zu geringer Lichtintensität erfasst wurde, z.B. da der Fußgänger dunkle Kleidung trägt.

Diese Informationen werden von der Bildauswertung an die Bilderfassungssteuerungseinheit 3 übermittelt. Die Bilderfassungssteuerungseinheit 3 legt nun fest, dass das zweite Bild 32 mit kürzerer Belichtungszeit aufgenommen wird und auf den Bildbereich 35 mit der Ampel 5 beschränkt ist, diesen jedoch ungebinnt erfasst.

Die Bilderfassungssteuerungseinheit 3 legt weiterhin fest, dass das dritte Bild 33 mit längerer Belichtungszeit aufgenommen wird und den Bildbereich 36 mit dem Fußgänger 6 ungebinnt erfasst. Das zweite und das dritte Bild werden der Bildverarbeitung zugeführt, die infolge der optimierten Belichtungs- und Auflösungs- (bzw. Binning-) Einstellungen aus dem zweiten und dritten Bild die relevanten Objekte, nämlich die grün geschaltete Ampel 5 und den in Richtung Bildmitte des ersten Bilds 31 gehenden Fußgänger 6 tatsächlich erkennen kann. Auf Grundlage dieser Bildauswertung wird als Fahrerassistenzfunktion eine Warnung an den Fahrer des Fahrzeugs ausgegeben, da eine Kollision mit dem Fußgänger droht, der im Begriff ist, die vorausliegende Fahrbahn oder Kreuzung zu überqueren, obwohl die Ampel für das Fahrzeug grün anzeigt. Auf diese Weise kann die vorausliegende Umgebung des Fahrzeugs und der umgebende Verkehr schneller und zuverlässiger erkannt werden als mit herkömmlichen Kameravorrichtungen.

In Fig. 1 sind schematisch weitere Eingangsquellen dargestellt, die von der Bilderfassungssteuerungseinheit 3 berücksichtigt werden können.

Aus der Bildauswertung eines zuvor aufgenommenen Bildes können die aktuellen Lichtbedingungen (Umgebungshelligkeit) ermittelt werden und der Belichtungsmodus für zukünftige Bilder kann entsprechend an die aktuellen Lichtbedingungen angepasst werden. Dem Systemzustand der Kameravorrichtung kann Rechnung getragen werden, indem z.B. bei einer Temperatur der Kameravorrichtung, die einen Grenzwert überschreitet, Bilderfassungssteuerungseinheit 3 einen Belichtungs- und Betriebsmodus einstellt, der den Energie- und Prozessorbedarf des Gesamtsystems senkt.

Zur optimierten Vermeidung von Bewegungsunschärfe in aufzunehmenden Bildern kann die Bilderfassungssteuerungseinheit 3 Fahrzeugdaten empfangen, insbesondere zur Dynamik, mit der sich das Fahrzeug aktuell bewegt, also z.B. die aktuelle Fahrzeuggeschwindigkeit. Auf Grundlage dieser Fahrzeugdaten kann wiederum die Belichtungszeit daran angepasst werden.

Es kann hierbei durch die Bilderfassungssteuerungseinheit 3 vorgegeben werden, dass der Belichtungsmodus, also die Belichtungszeit oder weitere Parameter für die Optronik bzw. den Bildsensor, nur für ein Bild einer zyklischen Bilderfolge angepasst wird. Im Beispiel von Fig. 2 könnte z.B. die Belichtungszeit des ersten Bildes 21 an die aktuelle Fahrzeuggeschwindigkeit angepasst werden, während die Belichtungszeit des zweiten 21 und dritten Bildes 23 nicht mit der Fahrzeuggeschwindigkeit variiert werden.

## Patentansprüche

1. Kameravorrichtung (1) eingerichtet zur Erfassung eines Umgebungsbereichs eines eigenen Fahrzeugs, die Kameravorrichtung umfassend:
eine Optronik und eine Bilderfassungssteuerungseinheit (3), die dazu ausgebildet sind, eine Bildfolge (21, 22, 23; 31, 32, 33) des Umgebungsbereichs aufzunehmen,
wobei die Optronik eine Weitwinkeloptik und einen hochauflösenden Bildaufnahmesensor (2) umfasst, und
die Optronik und die Bilderfassungssteuerungseinheit (3) dazu ausgebildet sind,
dass während der Aufnahme der Bildfolge (21, 22, 23; 31, 32, 33) eine Nutzung von mindestens drei unterschiedlichen Belichtungsmodi des Bildaufnahmesensors in Kombination mit mindestens zwei unterschiedlichen Binningmodi erfolgt, und
dass drei unterschiedliche Belichtungsmodi zur Aufnahme der Bildfolge (21, 22, 23; 31, 32, 33) verwendet werden: ein erster Belichtungsmodus mit einer optimalen Belichtungszeit, ein zweiter Belichtungsmodus mit einer Belichtungszeit, die kürzer ist als die optimale Belichtungszeit und ein dritter Belichtungsmodus mit einer Belichtungszeit, die länger ist als die optimale Belichtungszeit.

2. Kameravorrichtung (1) nach Anspruch 1, wobei die Optronik und die Bilderfassungssteuerungseinheit (3) dazu ausgebildet sind, dass die Aufnahme der Bildfolge (21, 22, 23; 31, 32, 33) gemäß einer fest vorgegebenen Reihenfolge der Kombinationen von Belichtungs- und Binningmodi erfolgt.

3. Kameravorrichtung (1) nach Anspruch 1 oder 2, wobei die Optronik und die Bilderfassungssteuerungseinheit (3) dazu ausgebildet sind, dass ein erster Binningmodus zur Aufnahme oder Erzeugung eines gebinnten "Übersichtsbildes" (21; 23; 31) und ein zweiter Binningmodus zur Aufnahme eines ungebinnten Teilbereichs (32; 33) vorgegeben werden.

4. Kameravorrichtung (1) nach Anspruch 3, wobei die Optronik und die Bilderfassungssteuerungseinheit (3) dazu ausgebildet sind, dass
der Belichtungsmodus für die Aufnahme des ungebinnten Teilbereichs (32; 33) aus mindestens einer vorangegangenen gebinnten Aufnahme (31) bestimmt wird.

5. Kameravorrichtung (1) nach Anspruch 1, 3 oder 4, wobei die Optronik und die Bilderfassungssteuerungseinheit (3) dazu ausgebildet sind, dass die Vorgabe eines geänderten Belichtungsund/oder Binningmodus für ein aufzunehmendes Bild adaptiv vorgenommen wird, indem eine bestimmte Kombination von Binningund Belichtungsmodus für die Aufnahme oder Erzeugung eines Bildes der Bildfolge (21, 22, 23; 31, 32, 33) vorgegeben wird, in Abhängigkeit von:
- dem Ergebnis der Bildauswertung mindestens eines vorherigen Bildes der Bildfolge (21, 22, 23; 31, 32, 33);
- Fahrzeugdaten und/oder
- dem Systemzustand der Kameravorrichtung (1).

6. Kameravorrichtung (1) nach einem der vorhergehenden Ansprüche, wobei die Optronik und die Bilderfassungssteuerungseinheit (3) dazu ausgebildet sind, dass eine Auswahl getroffen wird, welches Bild der Bildfolge, das mit einem ausgewählten Belichtungs- und Binningmodus aufgenommen/erzeugt wurde, einer Bildauswertung zugeführt wird, abhängt von:
- dem Ergebnis der Bildauswertung mindestens eines vorherigen Bildes der Bildfolge (21, 22, 23; 31, 32, 33);
- Fahrzeugdaten und/oder
- dem Systemzustand der Kameravorrichtung (1).

7. Kameravorrichtung (1) nach einem der vorhergehenden Ansprüche, wobei die Optronik und die Bilderfassungssteuerungseinheit (3) dazu ausgebildet sind, dass eine Anpassung der Belichtungszeit oder weiterer Parameter des Bildaufnahmesensors (2) individuell in einem der verschiedenen Belichtungsmodi vorgenommen wird in Abhängigkeit von:
- dem Ergebnis der Bildauswertung mindestens eines vorherigen Bildes der Bildfolge (21, 22, 23; 31, 32, 33);
- Fahrzeugdaten und/oder
- dem Systemzustand der Kameravorrichtung (1).

8. Kameravorrichtung (1) nach einem der Ansprüche 5 bis 7, wobei die Optronik und die Bilderfassungssteuerungseinheit (3) dazu ausgebildet sind, dass als Ergebnis der Bildauswertung die Umgebung des Fahrzeugs, Verkehrsteilnehmer und/oder Lichtbedingungen der Umgebung bestimmt werden.

9. Verfahren zur Erfassung eines Umgebungsbereichs eines eigenen Fahrzeugs mittels einer Kameravorrichtung (1) umfassend:
- Aufnehmen einer Bildfolge (21, 22, 23; 31, 32, 33) des Umgebungsbereichs des Fahrzeugs mittels einer Optronik, wobei die Optronik eine Weitwinkeloptik und einen hochauflösenden Bildaufnahmesensor (2) umfasst,
- wobei während des Aufnehmens der Bildfolge (21, 22, 23; 31, 32, 33) mindestens drei unterschiedliche Belichtungsmodi des Bildaufnahmesensors (2) in Kombination mit mindestens zwei unterschiedlichen "Binningmodi" genutzt werden, und
- drei unterschiedliche Belichtungsmodi zur Aufnahme der Bildfolge (21, 22, 23; 31, 32, 33) verwendet werden: ein erster Belichtungsmodus mit einer optimalen Belichtungszeit, ein zweiter Belichtungsmodus mit einer Belichtungszeit, die kürzer ist als die optimale Belichtungszeit und ein dritter Belichtungsmodus mit einer Belichtungszeit, die länger ist als die optimale Belichtungszeit.

## Claims

1. Camera apparatus (1) configured for capturing a surrounding region of an ego-vehicle, with the camera apparatus comprising:
an optoelectronic system and an image capturing control unit (3), which are embodied to record an image sequence (21, 22, 23; 31, 32, 33) of the surrounding region, wherein the optoelectronic system has a wide-angle lens and a high-resolution image recording sensor (2), and the optoelectronic system and the image capturing control unit (3) are embodied such
that at least three different exposure modes of the image recording sensor are used in combination with at least two different binning modes during the recording of the image sequence (21, 22, 23; 31, 32, 33), and
that three different exposure modes are used for recording the image sequence (21, 22, 23; 31, 32, 33): a first exposure mode with an optimum exposure time, a second exposure mode with an exposure time that is shorter than the optimum exposure time, and a third exposure mode with an exposure time that is longer than the optimum exposure time.

2. Camera apparatus (1) according to Claim 1, wherein the optoelectronic system and the image capturing control unit (3) are embodied such that the image sequence (21, 22, 23; 31, 32, 33) is recorded in accordance with a fixedly specified order of the combinations of exposure and binning modes.

3. Camera apparatus (1) according to Claim 1 or 2, wherein the optoelectronic system and the image capturing control unit (3) are embodied such that a first binning mode for recording or generating a binned "overview image" (21; 23; 31) and a second binning mode for recording an unbinned partial region (32; 33) are provided.

4. Camera apparatus (1) according to Claim 3, wherein the optoelectronic system and the image capturing control unit (3) are embodied such that
the exposure mode for recording the unbinned partial region (32; 33) is determined from at least one preceding binned recording (31).

5. Camera apparatus (1) according to Claim 1, 3 or 4, wherein the optoelectronic system and the image capturing control unit (3) are embodied such that the specification of a changed exposure and/or binning mode for an image to be recorded takes place adaptively by specifying a specific combination of binning and exposure mode for the recording or generation of an image of the image sequence (21, 22, 23; 31, 32, 33), in dependence on:
- the result of the image evaluation of at least one preceding image of the image sequence (21, 22, 23; 31, 32, 33);
- vehicle data and/or
- the system state of the camera apparatus (1).

6. Camera apparatus (1) according to one of the preceding claims, wherein the optoelectronic system and the image capturing control unit (3) are embodied such that a selection is made as to which image of the image sequence recorded/generated with a selected exposure and binning mode is supplied to an image evaluation, dependent on:
- the result of the image evaluation of at least one preceding image of the image sequence (21, 22, 23; 31, 32, 33);
- vehicle data and/or
- the system state of the camera apparatus (1).

7. Camera apparatus (1) according to one of the preceding claims, wherein the optoelectronic system and the image capturing control unit (3) are embodied such that an adaptation of the exposure time or of further parameters of the image recording sensor (2) is performed individually in one of the different exposure modes in dependence on:
- the result of the image evaluation of at least one preceding image of the image sequence (21, 22, 23; 31, 32, 33);
- vehicle data and/or
- the system state of the camera apparatus (1).

8. Camera apparatus (1) according to one of Claims 5 to 7, wherein the optoelectronic system and the image capturing control unit (3) are embodied such that, as a result of the image evaluation, the surroundings of the vehicle, road users and/or light conditions of the surroundings are determined.

9. Method for capturing a surrounding region of an ego-vehicle by means of a camera apparatus (1), comprising:
- recording an image sequence (21, 22, 23; 31, 32, 33) of the surrounding region of the vehicle by means of an optoelectronic system, wherein the optoelectronic system comprises a wide-angle optical unit and a high-resolution image recording sensor (2),
- wherein at least three different exposure modes of the image recording sensor (2) are used in combination with at least two different "binning modes" during the recording of the image sequence (21, 22, 23; 31, 32, 33), and
- three different exposure modes are used to record the image sequence (21, 22, 23; 31, 32, 33): a first exposure mode with an optimum exposure time, a second exposure mode with an exposure time that is shorter than the optimum exposure time, and a third exposure mode with an exposure time that is longer than the optimum exposure time.

## Revendications

1. Dispositif de caméra (1) aménagé pour acquérir une zone environnante d'un véhicule propre, le dispositif de caméra comprenant :
un système optronique et une unité de commande d'acquisition d'image (3) qui sont réalisés pour enregistrer une séquence d'images (21, 22, 23 ; 31, 32, 33) de la zone environnante,
le système optronique étant un système optique à grand angle et comprenant un capteur d'enregistrement d'image haute résolution (2), et
le système optronique et l'unité de commande d'acquisition d'image (3) étant réalisés de sorte que
pendant l'enregistrement de la séquence d'images (21, 22, 23 ; 31, 32, 33), une utilisation d'au moins trois modes d'exposition différents du capteur d'enregistrement d'image est effectuée en combinaison avec au moins deux modes de compartimentage différents, et
trois modes d'exposition différents sont utilisés pour l'enregistrement de la séquence d'images (21, 22, 23 ; 31, 32, 33) : un premier mode d'exposition ayant un temps d'exposition optimal, un deuxième mode d'exposition ayant un temps d'exposition qui est plus court que le temps d'exposition optimal, et un troisième mode d'exposition ayant un temps d'exposition qui est plus long que le temps d'exposition optimal.

2. Dispositif de caméra (1) selon la revendication 1, dans lequel le système optronique et l'unité de commande d'acquisition d'image (3) sont réalisés de telle sorte que l'enregistrement de la séquence d'images (21, 22, 23 ; 31, 32, 33) est effectué selon un ordre fixe spécifié des combinaisons de modes d'exposition et de compartimentage.

3. Dispositif de caméra (1) selon la revendication 1 ou 2, dans lequel le système optronique et l'unité de commande d'acquisition d'image (3) sont réalisés de telle sorte qu'un premier mode de compartimentage est spécifié pour l'enregistrement et la génération d'un « aperçu » compartimenté (21 ; 23 ; 31), et un deuxième mode de compartimentage est spécifié pour l'enregistrement d'une zone partielle non compartimentée (32 ; 33).

4. Dispositif de caméra (1) selon la revendication 3, dans lequel le système optronique et l'unité de commande d'acquisition d'image (3) sont réalisés de telle sorte que le mode d'exposition pour l'enregistrement de la zone partielle non compartimentée (32 ; 33) est déterminé à partir d'au moins un enregistrement compartimenté (31) précédent.

5. Dispositif de caméra (1) selon la revendication 1, 3 ou 4, dans lequel le système optronique et l'unité de commande d'acquisition d'image (3) sont réalisés de telle sorte que la spécification d'un mode d'exposition et/ou de compartimentage modifié pour une image à enregistrer est effectuée de manière adaptative en ce qu'une certaine combinaison de mode de compartimentage et de mode d'exposition est spécifiée pour l'enregistrement ou la génération d'une image de la séquence d'images (21, 22, 23 ; 31, 32, 33), en fonction :
- du résultat de l'évaluation d'image d'au moins une image précédente de la séquence d'images (21, 22, 23 ; 31, 32, 33) ;
- de données de véhicule, et/ou
- de l'état de système du dispositif de caméra (1) .

6. Dispositif de caméra (1) selon l'une quelconque des revendications précédentes, dans lequel le système optronique et l'unité de commande d'acquisition d'image (3) sont réalisés de telle sorte qu'un choix est fait pour savoir quelle image de la séquence d'images, qui a été enregistrée/générée par un mode d'exposition et de compartimentage sélectionné, sera soumise à une évaluation d'image, en fonction :
- du résultat de l'évaluation d'image d'au moins une image précédente de la séquence d'images (21, 22, 23 ; 31, 32, 33) ;
- de données de véhicule, et/ou
- de l'état de système du dispositif de caméra (1) .

7. Dispositif de caméra (1) selon l'une quelconque des revendications précédentes, dans lequel le système optronique et l'unité de commande d'acquisition d'image (3) sont réalisés de telle sorte qu'une adaptation du temps d'exposition ou d'autres paramètres du capteur d'enregistrement d'image (2) est effectuée individuellement dans l'un des différents modes d'exposition, en fonction :
- du résultat de l'évaluation d'image d'au moins une image précédente de la séquence d'images (21, 22, 23 ; 31, 32, 33) ;
- de données de véhicule, et/ou
- de l'état de système du dispositif de caméra (1) .

8. Dispositif de caméra (1) selon l'une quelconque des revendications 5 à 7, dans lequel le système optronique et l'unité de commande d'acquisition d'image (3) sont réalisés de telle sorte que l'environnement du véhicule, des usagers de la route et/ou des conditions de luminosité de l'environnement sont déterminés comme résultat de l'évaluation d'image.

9. Procédé d'acquisition d'une zone environnante d'un véhicule propre au moyen d'un dispositif de caméra (1), comprenant les étapes consistant à :
- enregistrer une séquence d'images (21, 22, 23 ; 31, 32, 33) de la zone environnante du véhicule au moyen d'un système optronique, le système optronique comprenant un système optique à grand angle et un capteur d'enregistrement d'image haute résolution (2),
- dans lequel, pendant l'enregistrement de la séquence d'images (21, 22, 23 ; 31, 32, 33), au moins trois modes d'exposition différents du capteur d'enregistrement d'image (2) sont exploités en combinaison avec au moins deux « modes de compartimentage » différents, et
- trois modes d'exposition différents sont utilisés pour enregistrer la séquence d'images (21, 22, 23 ; 31, 32, 33) : un premier mode d'exposition ayant un temps d'exposition optimal, un deuxième mode d'exposition ayant un temps d'exposition qui est plus court que le temps d'exposition optimal, et un troisième mode d'exposition ayant un temps d'exposition qui est plus long que le temps d'exposition optimal.
